# EUROPÄISCHE PATENTSCHRIFT

(11) **EP 2 449 272 B1**
(45) Veröffentlichungstag und Bekanntmachung des Hinweises auf die Patenterteilung: **16.04.2014**
(21) Anmeldenummer: 09776949.1
(22) Anmeldetag: 03.07.2009
(51) Int. Cl.: F16B 39/34, F16B 39/38

(54) **SICHERUNGSMUTTER**
LOCK NUT
CONTRE-ÉCROU

(43) Veröffentlichungstag der Anmeldung: 09.05.2012
(73) Patentinhaber: Flaig, Hartmut, 78554 Aldingen (DE)
(72) Erfinder: Flaig, Hartmut, 78554 Aldingen (DE)
(74) Vertreter: Liesegang, Eva
(86) Internationale Anmeldenummer: PCT/EP2009/004823
(87) Internationale Veröffentlichungsnummer: WO 2011/000393

(56) Entgegenhaltungen:
- EP-A1- 0 047 061
- GB-A- 610 355
- GB-A- 2 287 764
- US-A- 2 318 397
- US-A- 2 410 090

## Beschreibung

Die Erfindung betrifft eine Sicherungsmutter mit einem Mutterkörper, der einen Gewindeabschnitt mit Innengewinde und eine sich daran anschließende innere Ringnut aufweist, und mit einer Ringscheibe aus Metall, die in der Ringnut gehalten ist, wobei am inneren Umfang der Ringscheibe ein dem Innengewinde des Gewindeabschnitts entsprechendes Innengewinde eingeschnitten ist und das Innengewinde der Ringscheibe axial gegenüber dem Innengewinde des Mutterkörpers versetzt ist. Derartige Sicherungsmuttern sind beispielsweise aus der DE 26 38 560 C, DE 43 13 809 C1 und DE 43 13 845 C1 bekannt.

Weitere ähnliche Sicherungsmuttern sind beschrieben in US 2,318,397 A; US 2,410,090 A; GB 2287764 A; und GB 610355 A.

Spezieller betrifft die Erfindung eine Sicherungsmutter, die einen Metallkörper mit Innengewinde und einen sich daran anschließenden Halsfortsatz aufweist, der zu einer Ringnut verformt wird und in dem eine Sicherungs-Ringscheibe aus Metall reibschlüssig gehalten ist. An der inneren Randkante der Sicherungs-Ringscheibe ist ein dem Muttergewinde entsprechendes Gewinde eingeschnitten, das gegenüber dem Muttergewinde um einen geringen, unter der Gewindesteigung des Muttergewindes liegenden Betrag axial versetzt ist. Die Sicherungs-Ringscheibe weist in axialer Richtung eine gewisse Elastizität auf, wobei durch den Versatz des Innengewindes der Ringscheibe die Klemmkraft der Sicherungsmutter einstellbar ist und die Sicherungsmutter diese eingestellte Klemmkraft für viele Schraubvorgänge beibehält.

Diese bekannte Sicherungsmutter weist ausgezeichnete Sicherungseigenschaften auf und hat sich deshalb auf dem Markt durchgesetzt. Zur Erhöhung der Elastizität der Sicherungs-Ringscheibe, die z.B. bei bestimmten Muttergrößen oder bei extremen Temperaturbelastungen wünschenswert sein kann, schlagen die obengenannten Patente vor, die Ringscheibe mit segmentartigen Umfangsaussparungen an ihrem Außenumfang und gegebenenfalls mit zusätzlichen Kerben zu versehen. Dadurch ist es möglich, die Ringscheibe aus einem hart elastischen Material, wie Federstahl, herzustellen und dennoch die erforderliche Elastizität für die gewünschte axiale Auslenkung zu erreichen, wobei gleichwohl die elastische Rückstellkraft der Ringscheibe so groß bleibt, dass sich hohe Haltekräfte erzielen lassen. Dadurch, dass die Ringscheibe aus einem Material besteht, das zumindest gleich hart ist wie das jenige des Schraubbolzens, bleiben die Gewindegänge der Ringscheibe nach vielen Schraubenvorgängen unbeschädigt, so dass die Sicherungsmutter mehrfach gelöst und wieder angezogen werden kann, ohne dass dabei eine merkbare Änderung der Klemmkraft in Sicherheitsstellung auftritt. Es können Materialien zum Einsatz kommen, die sehr hohen Temperaturen widerstehen, was beispielsweise bei Verwendung in Kraftfahrzeugen von großer Bedeutung ist.

Die genannten Patente schlagen brauchbare Lösungen für die Optimierung der Elastizität der Sicherungs-Ringscheibe durch Vorsehen von Ausnehmungen am Außenumfang der Ringscheibe vor. In bestimmten Fällen kann jedoch eine noch größere Elastizität der Sicherungs-Ringscheibe und eine bessere Einstellbarkeit der Haltekraft der Sicherungsmutter erwünscht sein.

Aus dem Stand der Technik sind auch Sicherungsmuttern mit einem Sicherungs- und Dichtungsring aus Kunststoff bekannt, der ähnlich wie bei der gattungsgemäßen Sicherungsmutter an einem Halsfortsatz des Mutterkörpers gehalten ist. Solche Sicherungsmuttern sind beispielsweise beschrieben in EP 0 047 061 A1, DE-A-1 815 585, DE 28 13 994 C2, DE 36 40 225 C2, DE 84 24 281 U1, US-A-4,019,550, US-A-3,275,054, US-A-3,316,338, US-A-2,450,694, US-A-5,454,675. Diese Sicherungsmuttern beruhen jedoch auf einem anderen Wirkungsprinzip. Ein zunächst gewindeloser Abschnitt eines Sicherungs- und Dichtungsrings aus Kunststoff schließt sich unmittelbar an das Innengewinde der Mutter an und steht geringfügig über das Innengewinde vor. Beim Einschrauben eines Bolzens schneidet dieser in den Innenumfang der Sicherungs- und Dichtungsscheibe ein. Das Gros der genannten Schriften befasst sich mit der Aufnahme des ausweichenden Kunststoffmaterials beim Einschrauben des Bolzens.

Die Lehre dieses Standes der Technik ist in Bezug auf die Einstellung der Elastizität und Haltekraft der Sicherungs-Ringscheibe unter anderem deshalb nicht übertragbar auf eine Sicherungsmutter der gattungsgemäßen Art, weil sich die Kunststoff-Ringscheibe hinsichtlich ihrer Elastizität anders verhält als eine Ringscheibe aus Metall und weil bei diesem Stand der Technik kein axialer Versatz der Innengewinde von Ringscheibe und Mutterkörper vorgesehen ist. Die Haltekraft dieser Sicherungsmuttern beruht auf einem anderen Wirkungsprinzip. Die GB 2 287 764 A beschreibt eine Sicherungsmutter mit einer im Querschnitt L-förmigen Sicherungs-Ringscheibe aus Metall, die über einen entsprechenden Absatz auf ein Stirnende der Sicherungsmutter aufgeschoben wird. Ein Innengewinde wird in den Mutterkörper und die Sicherungs-Ringscheibe mit gleicher Steigung und Tiefe geschnitten, so dass ein Bolzen eingeschraubt werden kann, ohne dass ein Gewindeversatz vorgesehen wäre. Die Sicherungs-Ringscheibe ist mit einer nach außen weisenden konvexen Wölbung ausgebildet und wird beim Einschrauben des Bolzens in den Mutterkörper hineingedrückt, so dass sie nach dem Einschrauben des Bolzens flach an der Stirnfläche des Mutterkörpers anliegt. Auch in diesem eingeschraubten Zustand ist kein Versatz der Innengewinde von Sicherungsmutter und Ringscheibe vorgesehen. Auch diese Sicherungsmutter beruht somit auf einem anderen Wirkungsprinzip als die eingangs erörterten gattungsgemäßen Sicherungsmuttern.

Ausgehend von der gattungsgemäßen Sicherungsmutter ist es eine Aufgabe der Erfindung, sowohl die Elastizität der Sicherungs-Ringscheibe als auch die Haltekraft der Sicherungsmutter weiter zu optimieren und einstellen zu können.

Diese Aufgabe wird erfindungsgemäß durch eine Sicherungsmutter gemäß Patentanspruch 1 gelöst.

Die Erfindung sieht eine Sicherungsmutter mit einem Mutterkörper vor, der einen Gewindeabschnitt mit Innengewinde - als "Muttergewinde" bezeichnet - und eine sich daran anschließende innere Ringnut aufweist. Eine Ringscheibe aus Metall ist in der Ringnut gehalten. Am inneren Umfang der Ringscheibe ist ein dem Muttergewinde entsprechendes Innengewinde eingeschnitten, und das Innengewinde der Ringscheibe ist axial gegenüber dem Muttergewinde um eine Strecke versetzt, die kleiner als eine Gewindesteigung des Muttergewindes ist. Erfindungsgemäß ist die Dicke der Ringscheibe an ihrem Innendurchmesser größer als die Dicke der Ringscheibe an ihrem Außendurchmesser. In der bevorzugten Ausführung der Erfindung ist die Dicke der Ringscheibe an ihrem Außendurchmesser gleich oder kleiner als ungefähr eine Gewindesteigung des Muttergewindes, und die Dicke der Ringscheibe an ihrem Innendurchmesser liegt im Bereich von ungefähr einer Gewindesteigung bis ungefähr 2,5 Gewindesteigungen. In einer besonders bevorzugten Ausführung beträgt die Dicke der Ringscheibe an ihrem Außendurchmesser ungefähr 0,75 Gewindesteigungen des Muttergewindes, und die Dicke der Ringscheibe an ihrem Innendurchmesser beträgt ungefähr 1,5 Gewindesteigungen des Muttergewindes.

Durch die Ausbildung der Ringscheibe mit einer von ihrem Außendurchmesser zu ihrem Innendurchmesser zunehmenden Dicke ist es möglich, die Elastizität der Ringscheibe zu optimieren und gleichzeitig die Haltekraft der Sicherungsmutter nach Bedarf einzustellen. Die Elastizität der Ringscheibe wird maßgeblich, wenn auch nicht ausschließlich, bestimmt durch die absolute Dicke der Ringscheibe sowie durch das Verhältnis ihrer Dicke am Innendurchmesser im Verhältnis zur Dicke am Außendurchmesser. Die Haltekraft der Sicherungsmutter wird maßgeblich bestimmt durch die absolute Dicke der Ringscheibe sowie durch die Größe des Versatzes des Innengewindes der Ringscheibe relativ zu dem Muttergewinde. Darüberhinaus gilt, dass je größer die Anzahl der Gewindesteigungen am Innendurchmesser der Ringscheibe ist, desto größer wird das erzeugte Bremsmoment, wobei erfahrungsgemäß bei einer Dicke von mehr als 2 oder 2,5 Gewindesteigungen in der Praxis zu starke Bremsmomente erzeugt werden. Andererseits erlaubt eine größere Dicke der Ringscheibe an ihrem Innendurchmesser, beispielsweise im Bereich von 1,5 bis 2 Gewindesteigungen, größere Einschraubkräfte aufzunehmen, weil eine größere Flächenpressung entsteht. Da sich die Kräfte auf eine größere Fläche verteilen, kann das Problem des Fressens, also des lokalen Kaltverschweißens, beim Eindrehen eines Bolzens mit sehr hohen Eindrehkräften vermieden werden. Während in dem gattungsgemäßen Stand der Technik beschrieben ist, dass die konstante Dicke der Sicherungs-Ringscheibe etwa einer Gewindesteigung entsprechen soll, kann erfindungsgemäß die Elastizität der Ringscheibe variiert werden, indem ihre Dicke am Außendurchmesser verringert wird, und die Haltekraft kann eingestellt werden, indem ihre Dicke am Innendurchmesser vergrößert wird. Eine derartige Variation der Dicke der Sicherungs-Ringscheibe über ihrem Durchmesser zur Einstellung einerseits der Elastizität der Ringscheibe und andererseits der Haltekraft der Sicherungsmutter ist durch den Stand der Technik nicht vorgezeigt. Die Erfindung ermöglicht dadurch, eine Sicherungsmutter für unterschiedliche Anwendungsfälle zu dimensionieren, vom Einsatz in der Feinmechanik bis zum Automobilbau und der Bahntechnik.

In der bevorzugten Ausführung der Erfindung hat die Ringscheibe eine von ihrem Außendurchmesser zu ihrem Innendurchmesser stufenförmig zunehmende Dicke, wobei die Elastizität der Ringscheibe durch die Höhe, die Position und den Verlauf der Stufe einstellbar ist. In einer anderen Ausführung der Erfindung nimmt die Dicke der Ringscheibe von ihrem Außendurchmesser zu ihrem Innendurchmesser kontinuierlich zu.

In einer besonders bevorzugten Ausführung ist die Ringscheibe in Richtung der Stirnseite der Sicherungsmutter - also nach außen - konvex gewölbt. Diese Wölbung gibt eine definierte Ausrichtung der Ringscheibe vor, so dass diese sich bei der Herstellung des axialen Versatzes zwischen dem Innengewinde der Ringscheibe und dem Muttergewinde definiert verformt.

Wie bei dem gattungsgemäßen Stand der Technik beträgt der axiale Versatz des Innengewindes der Ringscheibe gegenüber dem Muttergewinde eine Strecke, welche vorzugsweise ungefähr einer Viertel bis einer halben Gewindesteigung entspricht.

Wie ebenfalls aus dem gattungsgemäßen Stand der Technik bekannt ist, können in den äußeren Umfang der Ringscheibe mehrere gleichmäßig über den Umfang der Ringscheibe verteilte Aussparungen eingeformt sein, um die Elastizität der Ringscheibe weiter zu erhöhen. Durch diese Aussparungen werden vorspringende Klauen gebildet, über welche die Ringscheibe reibschlüssig in der Ringnut gehalten ist. Die Aussparungen zwischen den Klauen sollten mindestens die gleichen Umfangsabmessungen haben wie die Klauen selbst. Vorzugsweise sind drei solche Klauen am Umfang gleichmäßig verteilt angeordnet.

Erfindungsgemäß ist im Bereich der inneren Ringnut ein Kalibrierabsatz ausgebildet, der beim Einfügen der Ringscheibe verformbar ist, um Fertigungstoleranzen auszugleichen. Alternativ oder zusätzlich kann auch an dem Außenumfang der Ringscheibe ein Kalibrieransatz ausgebildet sein, der beim Einfügen der Ringscheibe in die innere Ringnut verformbar ist.

Wie aus dem gattungsgemäßen Stand der Technik bekannt, besteht die Ringscheibe aus Metall, insbesondere aus Federstahl. Auch der Mutterkörper besteht aus Metall, insbesondere Stahl.

Die Erfindung sieht auch ein Verfahren zum Herstellen einer Sicherungsmutter der oben erläuterten Art vor. In der bevorzugten Ausführung der Erfindung wird die Ringscheibe zunächst in einem Vorverarbeitungsschritt mit konvexer Wölbung hergestellt und anschließend in eine Ausnehmung in dem Halsfortsatz des noch gewindelosen Mutterkörpers eingelegt, so dass die Ringscheibe in Richtung der Stirnseite der Sicherungsmutter konvex gewölbt ist. Anschließend wird der Halsfortsatz radial nach innen umbördelt, um den äußeren Rand der Ringscheibe axial festzuklemmen. In einem nachfolgenden einheitlichen Arbeitsgang wird ein identisches Innengewinde in den Mutterkörper und die Ringscheibe geschnitten, und anschließend wird der Innenbereich der Ringscheibe um die vorgegebene Strecke in axialer Richtung verformt, um den Versatz zwischen dem Innengewinde der Ringscheibe und dem Muttergewinde herzustellen. Diese Verformung erfolgt entgegen der Wölbungsrichtung der Ringscheibe, so dass die konvexe Wölbung der Ringscheibe verringert, jedoch nicht aufgehoben oder umgekehrt wird. Die konvexe Wölbung der Ringscheibe erhöht ihre Elastizität, so dass auch der Grad der konvexen Wölbung der Ringscheibe zur Einstellung der Elastizität der Ringscheibe eingesetzt werden kann.

Die Erfindung ist im Folgenden anhand bevorzugter Ausführungen mit Bezug auf die Zeichnungen näher erläutert. In den Figuren zeigen:
- Fig. 1: einen vertikalen Schnitt entlang der Linie I-I durch die erfindungsgemäße Sicherungsmutter mit eingesetzter Sicherungs-Ringscheibe in vormontiertem Zustand;
- Fig. 2: eine Draufsicht auf die Sicherungsmutter mit eingesetzter Sicherungs-Ringscheibe gemäß Fig. 1;
- Fig. 3: einen vertikalen Schnitt entlang der Linie III-III durch die erfindungsgemäße Sicherungsmutter in fertig montiertem Zustand;
- Fig. 4: eine Draufsicht auf die Sicherungsmutter gemäß Fig. 3;
- Fig. 5: eine Schnittdarstellung durch eine Sicherungs-Ringscheibe gemäß einer Ausführung der Erfindung vor ihrer Montage;
- Fig. 6: eine Schnittdarstellung durch eine Sicherungs-Ringscheibe gemäß einer anderen Ausführung der Erfindung vor ihrer Montage;
- Fig. 7: eine Schnittdarstellung durch eine Sicherungs-Ringscheibe gemäß einer anderen Ausführung der Erfindung vor ihrer Montage;
- Fig. 8: eine Draufsicht auf eine alternative Sicherungs-Ringscheibe zum Einsatz in einer erfindungsgemäßen Sicherungsmutter; und
- Fig. 9: eine Draufsicht auf eine Sicherungsmutter mit eingesetzter Sicherungs-Ringscheibe gemäß Fig. 5.

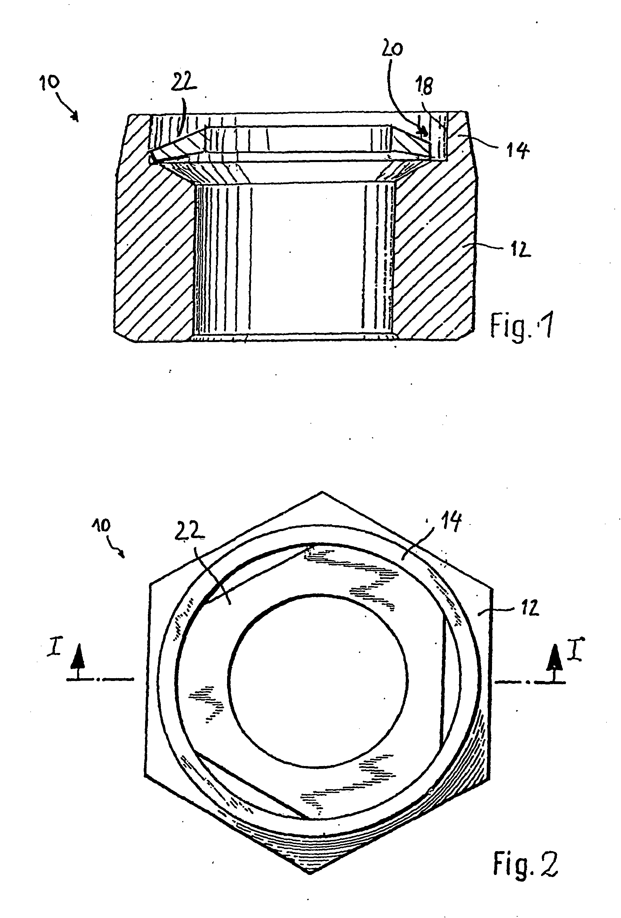

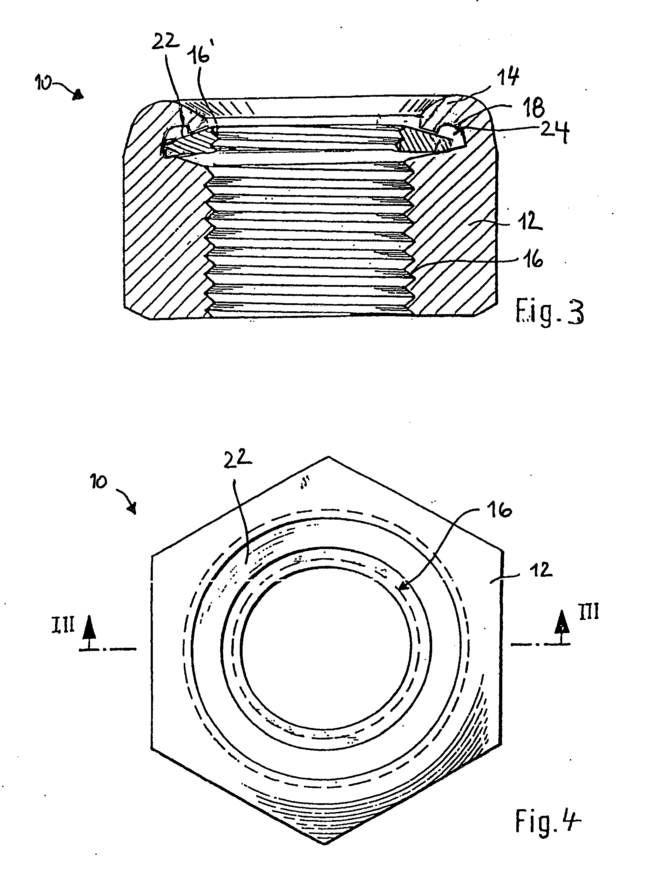

Wie in den Figuren 1 bis 4 dargestellt, weist die erfindungsgemäße Sicherungsmutter 10 einen Mutterkörper 12 mit einem konzentrischen Halsfortsatz 14 an einem Stirnende auf. Die Sicherungsmutter 10 ist beispielsweise als Sechskantmutter aus Stahl hergestellt und weist in ihrem in den Figuren 3 und 4 dargestellten fertigen Zustand ein Innengewinde 16 auf, das im Folgenden als "Muttergewinde" 16 bezeichnet ist. Der innere Rand 18 des Halsfortsatzes 14 ist gegenüber dem Kerndurchmesser der Sicherungsmutter 10 nach außen versetzt, um eine Aufnahme 20 für die Sicherungs-Ringscheibe 22 zu bilden. Die Sicherungs-Ringscheibe, im Folgenden auch kurz als Ringscheibe bezeichnet, ist aus Metall hergestellt, vorzugsweise aus einem Federmaterial, wie Federstahl oder Federbandstahl. In der in den Figuren 1 bis 4 dargestellten Ausführung weist die Ringscheibe 22 drei segmentartige Aussparungen auf, wobei die Ringscheibe an ihren zwischen diesen Aussparungen verbleibenden Umfangsbereichen in der Sicherungsmutter 10 fixiert wird, wie aus dem gattungsgemäßen Stand der Technik grundsätzlich bekannt ist.

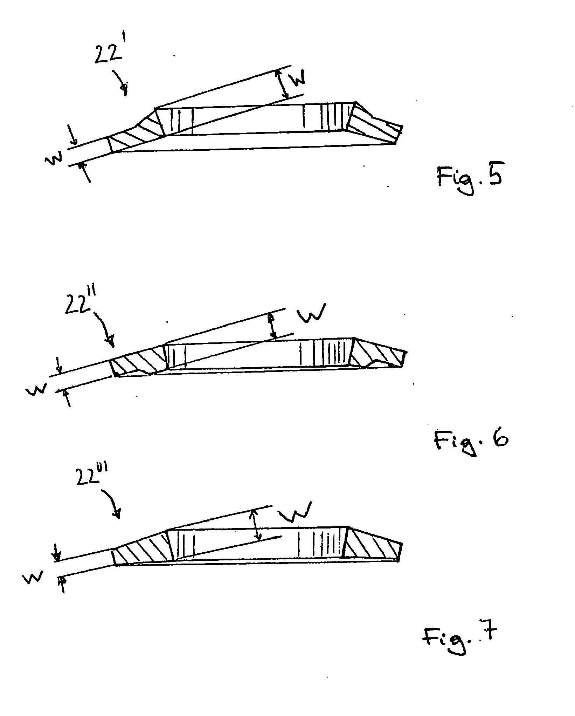

Abweichend von diesem Stand der Technik weist die Ringscheibe 22 keine gleichmäßige Dicke auf, sondern die Dicke der Ringscheibe an ihrem Innendurchmesser ist größer als die Dicke der Ringscheibe an ihrem Außendurchmesser. Diese Eigenschaft ist mit weiteren Einzelheiten anhand der Figuren 5 bis 7 erläutert.

Durch die Variation der Dicke der Sicherungs-Ringscheibe 22 über ihrem Durchmesser kann, wie eingangs erläutert, die Elastizität der Ringscheibe optimiert und die Haltekraft der Sicherungsmutter eingestellt werden. In der bevorzugten Ausführung der Erfindung ist die Dicke der Ringscheibe 22 an ihrem Außendurchmesser gleich oder geringer als die Höhe einer Gewindesteigung des Muttergewindes 16, vorzugsweise liegt sie im Bereich von einer halben bis einer Gewindesteigung, besonders bevorzugt hat sie einen Wert, der ungefähr drei Viertel einer Gewindesteigung entspricht. Die Dicke der Ringscheibe 22 an ihrem Innendurchmesser ist vorzugsweise größer oder gleich eine Gewindesteigung und kleiner oder gleich 2,5 Gewindesteigungen, besonders bevorzugt liegt die Dicke zwischen einer und zwei Gewindesteigungen, beispielsweise bei ungefähr 1,5 Gewindesteigung. Bei einer Dicke der Ringscheibe an ihrem Innendurchmesser von mehr als zwei Gewindesteigungen tritt in der Praxis in den meisten Anwendungsfällen eine zu starke Bremswirkung der Sicherungsmutter beim Einschrauben eines Bolzens ein, wobei die Bremswirkung und die Haltekraft auch abhängig sind von den Gesamtabmessungen der Sicherungsmutter und des Muttergewindes sowie von der Größe des axialen Versatzes des Gewindes der Ringscheibe 22 relativ zu dem Muttergewinde 16, wie im Folgenden noch beschrieben ist.

Bei der Herstellung der erfindungsgemäßen Sicherungsmutter wird die Ringscheibe 22 zunächst in die durch den Halsfortsatz 14 gebildete Aufnahme 20 eingelegt, wobei die Ringscheibe 22 in diesem vormontiertem Zustand eine konvexe Wölbung in Richtung der Stirnseite der Sicherungsmutter haben kann, wie auch in den Figuren 5 bis 7 gezeigt und mit Bezug auf diese Figuren im Einzelnen noch beschrieben ist.

Anschließend wird, wie in den Figuren 3 und 4 dargestellt, der Halsfortsatz 14 an seinem oberen Ende durch Umbördeln eingezogen, so dass die Ringscheibe 22 nun in der auf diese Weise entstandenen Nut 24 axial unverschieblich gehalten ist. Nach dieser Festlegung der Ringscheibe 22 wird mit einem üblichen Schneidwerkzeug das Innengewinde 16 in den Mutterkörper 12 eingeschnitten. Da die Ringscheibe 22 im Wesentlichen denselben Innendurchmesser aufweist wie der Mutterkörper 12, schneidet dabei das Schneidwerkzeug auch in die innere Randkante der Ringscheibe 22 ein dem Muttergewinde 16 entsprechendes Gewinde 16' ein. Darauf wird mittels eines Druckstempels oder dergleichen der innere Bereich der Ringscheibe 22 geringfügig axial in Richtung zum Muttergewinde 16 hin verdrückt, so dass das Muttergewinde 16 und das Innengewinde 16' der Ringscheibe 22 gegeneinander axial versetzt sind. Diese axiale Versatz sollte etwa einem Viertel bis der Hälfte einer Gewindesteigung entsprechen, so dass der Versatz der beiden Gewinde gegeneinander zwischen einem Viertel und der Hälfte eines Gewindegangs liegt.

In der bevorzugten Ausführung der Erfindung weist die Sicherungs-Ringscheibe 22 im vormontiertem Zustand eine in Richtung der Stirnseite des Mutterkörpers 12 konvexe Wölbung auf, also eine von dem Muttergewinde 16 abgewandte Wölbung. Bei der Ausbildung des axialen Versatzes mit Hilfe des Druckstempels oder dergleichen, wird diese konvexe Wölbung verringert, jedoch nicht ausgeglichen oder gar umgekehrt. Durch diese Vor-Wölbung der Sicherungs-Ringscheibe im vorgefertigten Zustand kann ein definierteres Verformungsverhalten beim Ausbilden des axialen Versatzes gewährleistet und somit eine genauere Einstellung des axialen Versatzes und der daraus resultierenden Haltekraft der Sicherungsmutter erzielt werden.

Ein nicht gezeigter, in die Mutter eingeschraubter Gewindebolzen wird allseitig von der Ringscheibe 22 festgeklemmt, wobei die Federkraft der Ringscheibe in axialer Richtung für die Klemmkraft maßgebend ist. Die Federkraft der Ringscheibe 22 wird maßgeblich durch ihre Elastizität bestimmt. Figuren 5 bis 7 zeigen beispielhafte Ausgestaltungen der erfindungsgemäßen Sicherungs-Ringscheibe zur Optimierung der Elastizität der Ringscheibe und der Haltekraft der Sicherungsmutter.

Die Fig. 5 bis 7 zeigen mögliche Ausführungen zur Realisierung der sich zu ihrem Außendurchmesser hin verjüngenden Sicherungs-Ringscheibe 22', 22" und 22"'. Die in den Fig. 5 bis 7 gezeigten Ausführungen der Sicherungs-Ringscheibe 22', 22", 22'" weisen keine segmentartigen Aussparungen an ihrem Umfang auf. Solche und/oder anders gestaltete Aussparungen zur Erhöhung der Elastizität der Ringscheibe können jedoch auch bei den in den Fig. 5 bis 7 dargestellten Ringscheiben 22', 22", 22"' vorgesehen sein.

In den in Fig. 5 bis 7 dargestellten Ausführungen ist die Dicke der Ringscheibe 22', 22", 22"' an ihrem Außendurchmesser mit w bezeichnet und die Dicke der Ringscheibe 22', 22", 22'" an ihrem Innendurchmesser ist mit W bezeichnet. Erfindungsgemäß ist W > w, wobei die Dicke w am Außendurchmesser vorzugsweise kleiner oder gleich eine Gewindesteigung und größer als eine halbe Gewindesteigung des Muttergewindes 16 ist und beispielsweise 0,75 Gewindesteigungen beträgt und wobei die Dicke W am Innendurchmesser größer oder gleich eine Gewindesteigung und vorzugsweise kleiner als 2,5 Gewindesteigungen ist und beispielsweise 1,5 Gewindesteigungen beträgt. Die genauen Abmessungen der Ringscheibe 22', 22", 22"' sind abhängig von der gewünschten Elastizität der Ringscheibe, der einzustellenden Haltekraft der Sicherungsmutter, den verwendeten Materialien, den Gesamtabmessungen der Sicherungsmutter und dem Muttergewinde. Die Verjüngung der Ringscheibe 22', 22", 22"' kann kontinuierlich verlaufen, wie in Fig. 7 gezeigt, oder stufenförmig, wie in Fig. 5 und Fig. 6 gezeigt, wobei eine oder mehrere Stufen vorgesehen sein können, die schräg verlaufen, wie in Fig. 5 und Fig. 6 gezeigt, oder unter einem Winkel von 90° angeordnet sind. Auch durch die Positionierung der Stufe(n) in radialer Richtung kann die Elastizität der Ringscheibe 22', 22" beeinflusst werden. Die Verjüngung kann auch einen anderen als den gezeigten Verlauf haben und beispielsweise parabolisch oder hyperbolisch sein. Die Erfindung ist nicht auf die gezeigten Ausführungen beschränkt.

Wenn eine Ringscheibe 22', 22", 22"', wie die in Fig. 5 bis 7 gezeigten, in einer Sicherungsmutter gemäß den Fig. 1 bis 4 eingesetzt wird, so wird diese Ringscheibe 22', 22", 22'" so in die Aufnahme 20 eingesetzt, dass ihre konvexe Wölbung nach außen (in der Figur nach oben) weist. Bei Verformung mit einem Druckstempel oder dergleichen würde die Ringscheibe 22', 22", 22'" an ihrem inneren Rand in Richtung des Muttergewindes 16 gedrückt, wobei sie die konvexe Wölbung jedoch beibehält; diese Wölbung wird also verringert, jedoch weder ausgeglichen noch umgekehrt. Die Wölbung der Sicherungs-Ringscheibe kann bei ihrer Herstellung ohne Schwierigkeiten ausgebildet werden, wenn sie beispielsweise aus einem Federbandstahl ausgestanzt wird.

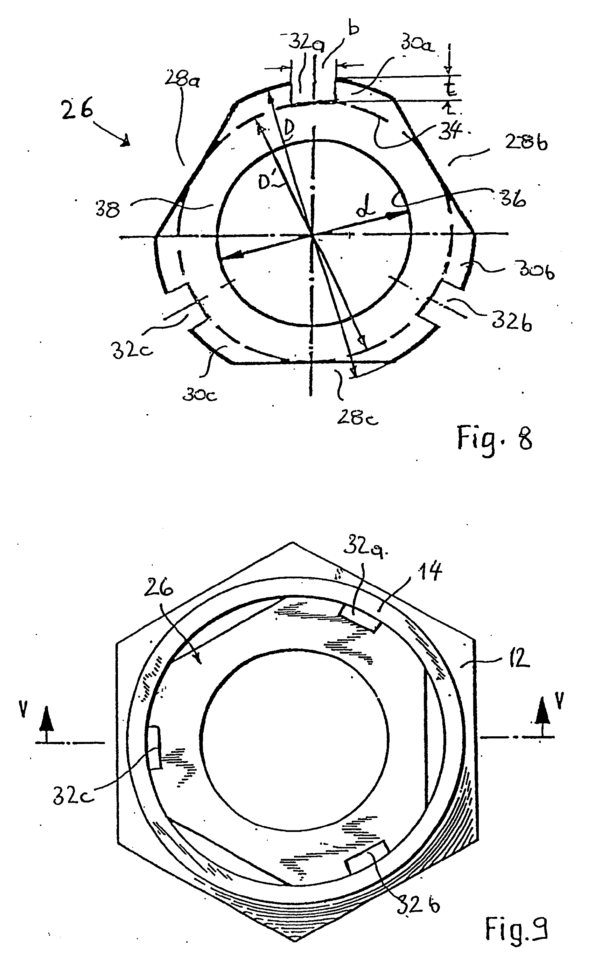

Eine weitere Ausführung der Sicherungs-Ringscheibe und der Sicherungsmutter gemäß der Erfindung ist in den Fig. 8 und 9 gezeigt, wobei die Verjüngung der Sicherungs-Ringscheibe aus diesen Figuren nicht zu erkennen ist.

Die Ringscheibe 26 mit Außendurchmesser D und Innendurchmesser d weist drei segmentartige Aussparungen 28a, 28b, 28c auf. Die zwischen diesen Aussparungen verbleibenden Umfangsbereiche der Ringscheibe 26 sind mit 30a, 30b, 30c bezeichnet. In jeden dieser Umfangsbereiche 30a, 30b, 30c ist mittig eine Kerbe 32a, 32b, 32c rechteckiger Gestalt mit parallelen Seitenwänden eingeformt. Dabei ist die radiale Tiefe t dieser Kerben so bemessen, dass sie gleich der maximalen Tiefe der Segmentaussparungen 28a, 28b, 28c, ist. Damit ergibt sich zwischen einem - gedachten - eingeschriebenen Kreis 34 mit Durchmesser D' und der Innenkante 36 der Ringscheibe 30 ein innerer Ringbereich 38, der frei von Aussparungen, Kerben oder dergleichen ist und für die erforderliche Stabilität sorgt. Die maximale radiale Tiefe der Segmentaussparungen 28a, 28b, 28c liegt vorzugsweise bei einem Drittel der maximalen radialen Breite der Sicherungs-Ringscheibe 26. Die Breite b der Kerben 32a, 32b, 32c liegt vorzugsweise im Bereich zwischen einem Viertel und einem Drittel der Umfangserstreckung des jeweiligen Umfangsbereichs 30a, 30b, 30b.

Bei allen Ausführungsformen können die Kerben, ebenso wie die Segmentaussparungen oder die Aussparungen in Form von Teilkreisbahnen, mit der Herstellung der Sicherungs-Ringscheibe 26 in diese eingeformt oder nachträglich in die Ringscheibe eingeschnitten werden.

Durch die erfindungsgemäße Gestaltung der Ringscheibe wird die Fedrigkeit und Elastizität der Ringscheibe gegenüber den bekannten Sicherungs-Ringscheiben erhöht, ohne ihre Stabilität zu beeinträchtigen. Dadurch können einerseits höhere Klemmkräfte erzielt werden, andererseits ist besser gewährleistet, dass die Sicherungsmutter auch bei mehrmaliger Verwendung ihre ursprüngliche Elastizität und dadurch ihre Brauchbarkeit behält. Über die Dicke W der Ringscheibe an ihrem Innendurchmesser lässt sich die Haltekraft einstellen.

Gemäß der Erfindung (in den Figuren nicht dargestellt) ist an den inneren Rand der Aufnahme 20 und/oder an dem äußeren Rand der Ringscheibe 22 ein Absatz oder Fortsatz angeformt, der sich verformen kann, wenn die Ringscheibe beim Umbürden des Halsfortsatzes 14 in der Nut 24 eingeklemmt wird. Dadurch können Fertigungstoleranzen bei der Herstellung des Mutterkörpers 12 und der Sicherungs-Ringscheibe 22 ausgeglichen werden.

Die in der vorstehenden Beschreibung, den Figuren und den Ansprüchen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 10: Sicherungsmutter
- 12: Mutterkörper
- 14: Halsfortsatz
- 16: Innengewinde, Muttergewinde
- 16': Innengewinde
- 18: Innerer Rand des Halsfortsatzes 14
- 20: Aufnahme
- 22, 22', 22", 22"': Sicherungs-Ringscheibe
- 24: Nut
- 26: Sicherungs-Ringscheibe
- 28a, 28b, 28c: Aussparungen
- 30a, 30b, 30c: Umfangsbereiche
- 32a, 32b, 32c: Kerben
- 34: Eingeschriebener Kreis
- 36: Innenkante der Ringscheibe
- 38: Innerer Ringbereich

- W: Dicke der Ringscheibe am Innendurchmesser
- w: Dicke der Ringscheibe am Außendurchmesser
- D: Außendurchmesser der Ringscheibe
- d: Innendurchmesser der Ringscheibe
- D': Durchmesser des eingeschriebenen Kreises

## Patentansprüche

1. Sicherungsmutter mit einem Mutterkörper (12), der einen Gewindeabschnitt mit Innengewinde (16) und eine sich daran anschließende innere Ringnut (24) aufweist, und einer Ringscheibe (22; 26) aus Metall, die in der Ringnut gehalten ist, wobei am inneren Umfang der Ringscheibe (22; 26) ein dem Innengewinde (16) des Gewindeabschnitts entsprechendes Innengewinde (16') eingeschnitten ist und das Innengewinde (16') der Ringscheibe (22; 26) axial gegenüber dem Innengewinde (16) des Mutterkörpers (12) um eine Strecke versetzt ist, die kleiner als eine Gewindesteigung des Innengewindes (16) ist, wobei die Dicke (W) der Ringscheibe (22; 26) an ihrem Innendurchmesser größer ist als die Dicke (w) der Ringscheibe (22; 26) an ihrem Außendurchmesser, **dadurch gekennzeichnet, dass** im Bereich der inneren Ringnut (24) und/oder an dem Außenumfang der Ringscheibe (22; 26) ein Kalibrieransatz angeformt ist, der beim Einfügen der Ringscheibe in die innere Ringnut (24) verformbar ist, um Fertigungstoleranzen auszugleichen.

2. Sicherungsmutter nach Anspruch 1, **dadurch gekennzeichnet, dass** die Dicke (w) der Ringscheibe (22; 26) an ihrem Außendurchmesser gleich oder kleiner als ungefähr eine Gewindesteigung des Innengewindes (16) ist.

3. Sicherungsmutter nach Anspruch 2, **dadurch gekennzeichnet, dass** die Dicke (w) der Ringscheibe (22; 26) an ihrem Außendurchmesser größer oder gleich eine halbe Gewindesteigung ist.

4. Sicherungsmutter nach einem der vorangehenden Ansprüche, **dadurch gekennzeichnet, dass** die Dicke (W) der Ringscheibe (22; 26) an ihrem Innendurchmesser im Bereich von ungefähr einer Gewindesteigung bis ungefähr 2,5 Gewindesteigungen des Innengewindes (16) liegt.

5. Sicherungsmutter nach Anspruch 4, **dadurch gekennzeichnet, dass** die Dicke (W) der Ringscheibe (22; 26) an ihrem Innendurchmesser zwischen einer und zwei Gewindesteigungen beträgt.

6. Sicherungsmutter nach einem der vorangehenden Ansprüche, **dadurch gekennzeichnet, dass** die Dicke (W) der Ringscheibe an ihrem Außendurchmesser ungefähr 0,75 Gewindesteigungen beträgt und die Dicke (W) der Ringscheibe an ihrem Innendurchmesser ungefähr 1,5 Gewindesteigungen des Innengewindes (16) beträgt.

7. Sicherungsmutter nach einem der vorangehenden Ansprüche, **dadurch gekennzeichnet, dass** die Ringscheibe (22"') eine von Ihrem Außendurchmesser zu ihrem Innendurchmesser kontinuierlich zunehmende Dicke aufweist.

8. Sicherungsmutter nach einem der Ansprüche 1 bis 6, **dadurch gekennzeichnet, dass** die Ringscheibe (22', 22") eine von Ihrem Außendurchmesser zu ihrem Innendurchmesser stufenförmig zunehmende Dicke aufweist.

9. Sicherungsmutter nach einem der vorangehenden Ansprüche, **dadurch gekennzeichnet, dass** die Ringscheibe (22, 22', 22", 22"') in Richtung der Stirnseite der Sicherungsmutter konvex gewölbt ist.

10. Sicherungsmutter nach einem der vorangehenden Ansprüche, **dadurch gekennzeichnet, dass** das Innengewinde (16') der Ringscheibe (22; 26) axial gegenüber dem Innengewinde (16) des Mutterkörpers (12) um eine Strecke versetzt ist, die ungefähr ¼ bis ½ der Gewindesteigung beträgt.

11. Sicherungsmutter nach einem der vorangehenden Ansprüche, **dadurch gekennzeichnet, dass** in den äußeren Umfang der Ringscheibe (26) mehrere gleichmäßig über den Umfang der Ringscheibe verteilte Aussparungen (28a, 28b, 28c) eingeformt sind

12. Sicherungsmutter nach Anspruch 11, **dadurch gekennzeichnet, dass** durch die Aussparungen (28a, 28b, 28c) vorspringende Klauen (30a, 30b, 30c) mit im wesentlichen radial verlaufenden Seitenwänden, gebildet sind, über welche die Ringscheibe reibschlüssig in der Ringnut (24) gehalten ist, und dass die Aussparungen (28a, 28b, 28c) zwischen den Klauen (30a, 30b, 30c) mit dem verbleibenden Ringscheibenmaterial Ringabschnitte mindestens gleicher Umfangsabmessungen wie die Klauen bilden.

13. Sicherungsmutter nach Anspruch 12, dadurch g e **kennzeichnet**, dass drei Klauen (30a, 30b, 30c) am Umfang verteilt angeordnet sind.

14. Sicherungsmutter nach einem der vorangehenden Ansprüche, **dadurch gekennzeichnet, dass** die Ringscheibe (22; 26) aus Federstahl hergestellt ist.

15. Verfahren zum Herstellen einer Sicherungsmutter nach einem der vorangehenden Ansprüche, **dadurch gekennzeichnet, dass** die Ringscheibe (22; 26) in eine Ausnehmung in einem Halsfortsatz (14) des noch gewindelosen Mutterkörpers (12) eingelegt und durch Umbördeln des Halsfortsatzes (14) radial nach innen der äußere Rand der Ringsscheibe (22; 26) axial festgeklemmt wird, wobei der Kalibrieransatz verformt wird, dass dann in einem einzigen Arbeitsgang ein identisches Innengewinde (16, 16') in den Mutterkörper (12) und die Ringscheibe (22; 26) geschnitten wird und dass schließlich der Innenbereich der Ringscheibe (22; 26) um eine vorgegebene Strecke in axialer Richtung verformt wird.

16. Verfahren nach Anspruch 15, **dadurch gekennzeichnet, dass** die Ringscheibe (22; 22'; 22"; 22"') in einem Vorverarbeitungsschritt mit konvexer Wölbung hergestellt wird und so in die Ausnehmung in dem Halsfortsatz des Mutterkörpers (12) eingelegt wird, dass die Ringscheibe (22; 22'; 22"; 22"') in Richtung der Stirnseite der Sicherungsmutter konvex gewölbt ist, wobei die konvexe Wölbung der Ringscheibe bei der Verformung verringert, jedoch nicht umgekehrt wird.

## Claims

1. A lock nut including a nut body (12) having a threaded section including an internal thread (16) and an adjacent inner annular groove (24), and an annular disk (22; 26) of metal which is held in the annular groove, wherein, at the inner circumference of the annular disk (22; 26), an internal thread (16') corresponding to the internal thread (16) of the threaded section is cut and the internal thread (16') of the annular disk (22; 26) is offset axially relative to the internal thread (16) of the nut body (12) by a distance which is smaller than a thread pitch of the internal thread, wherein the thickness (W) of the annular disk (22;26) at its inner diameter is larger than the thickness (w) of the annular disk (22;26) at its outer diameter, and **characterized in that** in the area of the inner annular groove (24) and/or at the outer periphery of the annular disk (22; 26), a calibration shoulder is integrally formed, the calibration shoulder being deformable when inserting the annular disk into the inner annular groove (24) for compensating manufacturing tolerances.

2. The lock nut according to claim 1, **characterized in that** the thickness (w) of the annular disk (22; 26) at its outer diameter is the same or smaller than about one thread pitch of the internal thread (16).

3. The lock nut according to claim 2, **characterized in that** the thickness (w) of the annular disk (22; 26) at its outer diameter is larger or the same as half a thread pitch.

4. The lock nut according to one of the preceding claims, **characterized in that** the thickness (W) of the annular disk (22; 26) at its inner diameter is in the range of about one thread pitch to about 1.5 thread pitches of the internal thread (16).

5. The lock nut according to claim 4, **characterized in that** the thickness (W) of the annular disk (22; 26) at its inner diameter is between one and two thread pitches.

6. The lock nut according to one of the preceding claims **characterized in that** the thickness (w) of the annular disk at its outer diameter is about 0.75 thread pitches and the thickness (W) of the annular disk at its inner diameter is about 1.5 of thread pitches of the internal thread (16).

7. The lock nut according to one of the preceding claims, **characterized in that** the annular disk (22"') has a thickness which increased continuously from its outer diameter to its inner diameter.

8. The lock nut according to one of the claims 1 to 6, **characterized in that** the annular disk (22', 22") has a thickness which increases stepwise from its outer diameter to its inner diameter.

9. The lock nut according to one of the preceding claims, **characterized in that** the annular disk (22, 22', 22", 22"') is curved convexly towards the end face of the lock nut.

10. The lock nut according to one of the preceding claims, **characterized in that** the internal thread (16') of the annular disk (22; 26) is offset axially relative to the internal thread (16) of the nut body (12) by a distance which is about one fourth to one half of the thread pitch.

11. The lock nut according to one of the preceding claims, **characterized in that**, in the outer periphery of the annular disk (26), a plurality of recesses (28a, 28b, 28c) are formed, the recesses being equally spaced along the periphery of the annular disk.

12. The lock nut according to claim 11 **characterized in that** said recesses (28a, 28b, 28c) form protruding claws (30a, 30b, 30c) having essentially radially extending sidewalls wherein said claws hold said annular disk within said annular groove (24) by means of friction, and that the recesses (28a, 28b, 28c) between said claws (30a, 30b, 30c), together with the remaining material of annular disk, form ring sections having at least the same peripheral dimensions as said claws.

13. The lock nut according to claim 12, **characterized in that** three claws (30a, 30b, 30c) are spaced along the periphery.

14. The lock nut according to one of the preceding claims, **characterized in that** said annular disk (22; 26) is manufactured from spring steel.

15. A method of manufacturing a lock nut according to one of the preceding claims, **characterized in that** the annular disk (22; 26) is inserted into a recess in a neck extension (14) of the unthreaded nut body (12) and the neck extension (14) is crimped radially towards the inside for clamping the outer edge of the annular disk (22; 26) in the axial direction thereby deforming the calibration shoulder and, subsequently, in a one-step process, an identical internal thread (16; 16') is cut into the nut body (12) and the annular disk (22; 26) and, finally, the inner part of the annular disk (22; 26) is deformed by a defined distance in an axial direction.

16. The method of claim 15, **characterized in that** the annular disk (22; 22' , 22", 22'") is manufactured in a pre-processing step to have a convex curvature and is inserted into the recess in the neck extension of the nut body (12) so that the annular disk (22; 22', 22", 22"') is curved convexly into the direction of the end face of the lock nut wherein the convex curvature of the annular disk is reduced upon deformation but will be not reversed.

## Revendications

1. Contre-écrou, comportant un corps d'écrou (12) muni d'une partie filetée avec un filet intérieur (16) et une rainure annulaire (24) intérieure, adjacente à ce dernier, et un disque annulaire (22 ; 26) en métal qui est maintenu dans ladite rainure annulaire, un filet intérieur (16'), correspondant au filet intérieur (16) de la partie filetée, étant taillé sur le pourtour intérieur du disque annulaire (22 ; 26) et le filet intérieur (16') du disque annulaire (22 ; 26) étant décalé axialement par rapport au filet intérieur (16) du corps d'écrou (12) selon une distance inférieure au pas de vis du filet intérieur (16), l'épaisseur (W) du disque annulaire (22 ; 26), au niveau de son diamètre intérieur, étant supérieure à l'épaisseur (w) du disque annulaire (22 ; 26) au niveau de son diamètre extérieur, **caractérisé en ce que** dans la zone de la rainure annulaire (24) intérieure et/ou sur le pourtour extérieur du disque annulaire (22 ; 26) est formée une saillie de calibrage qui, au moment de l'introduction du disque annulaire dans la rainure annulaire (24) intérieure, est apte à se déformer pour compenser des tolérances de fabrication.

2. Contre-écrou selon la revendication 1, **caractérisé en ce que** l'épaisseur (w) du disque annulaire (22 ; 26) au niveau de son diamètre extérieur est inférieure ou égale à approximativement un pas de vis du filet intérieur (16).

3. Contre-écrou selon la revendication 2, **caractérisé en ce que** l'épaisseur (w) du disque annulaire (22 ; 26) au niveau de son diamètre extérieur est supérieure ou égale à la moitié d'un pas de vis.

4. Contre-écrou selon l'une quelconque des revendications précédentes, **caractérisé en ce que** l'épaisseur (W) du disque annulaire (22 ; 26) au niveau de son diamètre intérieur se situe dans une plage allant approximativement d'un pas de vis à approximativement 2,5 pas de vis du filet intérieur (16).

5. Contre-écrou selon la revendication 4, **caractérisé en ce que** l'épaisseur (W) du disque annulaire (22 ; 26) au niveau de son diamètre intérieur se situe entre un et deux pas de vis.

6. Contre-écrou selon l'une quelconque des revendications précédentes, **caractérisé en ce que** l'épaisseur (w) du disque annulaire au niveau de son diamètre extérieur mesure approximativement 0,75 pas de vis et l'épaisseur (W) du disque annulaire au niveau de son diamètre intérieur mesure approximativement 1,5 pas de vis du filet intérieur (16).

7. Contre-écrou selon l'une quelconque des revendications précédentes, **caractérisé en ce que** le disque annulaire (22"') a une épaisseur qui augmente en continu depuis son diamètre extérieur jusqu'à son diamètre intérieur.

8. Contre-écrou selon l'une quelconque des revendications 1 à 6, **caractérisé en ce que** le disque annulaire (22', 22") a une épaisseur qui augmente graduellement depuis son diamètre extérieur jusqu'à son diamètre intérieur.

9. Contre-écrou selon l'une quelconque des revendications précédentes, **caractérisé en ce que** le disque annulaire (22, 22', 22", 22"') est courbé sous forme convexe en direction de la face frontale du contre-écrou.

10. Contre-écrou selon l'une quelconque des revendications précédentes, **caractérisé en ce que** le filet intérieur (16') du disque annulaire (22 ; 26) est décalé axialement par rapport au filet intérieur (16) du corps d'écrou (12) selon une distance qui correspond approximativement à 1/4 à 1/2 du pas de vis.

11. Contre-écrou selon l'une quelconque des revendications précédentes, **caractérisé en ce que** dans le pourtour extérieur du disque annulaire (26) sont formés plusieurs dégagements (28a, 28b, 28c) uniformément répartis sur le pourtour dudit disque annulaire.

12. Contre-écrou selon la revendication 11, **caractérisé en ce que** par les dégagements (28a, 28b, 28c) sont formées des mâchoires (30a, 30b, 30c) saillantes avec des parois latérales orientées sensiblement radialement, par lesquelles le disque annulaire est maintenu par friction dans la rainure annulaire (24), et **en ce que** lesdits dégagements (28a, 28b, 28c) entre les mâchoires (30a, 30b, 30c) forment, avec le matériau subsistant du disque annulaire, des segments annulaires ayant des dimensions périphériques au moins égales à celles desdites mâchoires.

13. Contre-écrou selon la revendication 12, **caractérisé en ce que** trois mâchoires (30a, 30b, 30c) sont réparties sur le pourtour.

14. Contre-écrou selon l'une quelconque des revendications précédentes, **caractérisé en ce que** le disque annulaire (22 ; 26) est réalisé en acier pour ressorts.

15. Procédé pour la réalisation d'un contre-écrou selon l'une quelconque des revendications précédentes, **caractérisé en ce que** le disque annulaire (22 ; 26) est mis en place dans un évidement dans un prolongement formant collerette (14) du corps d'écrou (12) non encore fileté, et, par le rabattement du prolongement formant collerette (14) radialement vers l'intérieur, le bord extérieur du disque annulaire (22 ; 26) est bloqué axialement, la saillie de calibrage étant déformée, **en ce que**, ensuite, dans une seule étape, un filet intérieur (16, 16') identique est taillé dans le corps d'écrou (12) et le disque annulaire (22 ; 26) et **en ce que**, finalement, la zone intérieure du disque annulaire (22 ; 26) est déformée dans le sens axial sur une distance prédéfinie.

16. Procédé selon la revendication 15, **caractérisé en ce que** le disque annulaire (22 ; 22' ; 22" ; 22"') est réalisé avec une courbure convexe au cours d'une étape préliminaire et est ainsi mis en place dans l'évidement dans le prolongement formant collerette du corps d'écrou (12), **en ce que** le disque annulaire (22 ; 22' ; 22" ; 22"') est courbé sous forme convexe en direction de la face frontale du contre-écrou, la courbure convexe du disque annulaire étant diminuée, mais non inversée, au cours de la déformation.
